# EUROPÄISCHE PATENTANMELDUNG

(11) **EP 2 492 893 A2**
(43) Veröffentlichungstag der Anmeldung: **29.08.2012**
(21) Anmeldenummer: 11006642.0
(22) Anmeldetag: 12.08.2011
(51) Int. Cl.: G09B 11/04

(54) **Vorrichtung zum Erlernen des linkshändigen Schreibens**

(30) Priorität: 17.08.2010 DE 202010011453 U
(71) Anmelder: Sattler, Johanna Barbara, 80331 München (DE)
(72) Erfinder: Sattler, Johanna Barbara, 80331 München (DE)

(57) **Zusammenfassung**

Die vorliegende Erfindung bezieht sich in einem ersten Aspekt auf eine Vorrichtung umfassend eine Einrichtung zum Anlegen und/oder Fixieren des zu beschreibenden Blattes, dadurch gekennzeichnet, dass diese Einrichtung ein Drehen des Blattes gegen den Uhrzeigersinn um von 5 bis 85° bezogen auf die untere Außenkante der Vorrichtung hervorruft.

In einer weiteren bevorzugten Ausführungsform handelt es sich bei der Vorrichtung um eine Schreibtischauflage, die besonders bevorzugt aus Papier, Pappe, Kunststoff, Gummi, Holz oder Metall besteht oder eines oder mehrere der vorgenannten Materialien umfasst. Besonders bevorzugt ist eine Ausfertigung aus Kunststoff oder Gummi, die eine wasser- und wischfeste Oberfläche aufweist, auf die das Blatt aufgelegt wird, sowie eine mit einer rutschhemmenden Beschichtung versehene Unterseite.

In einer weiteren bevorzugten Ausführungsform enthält die Vorrichtung weitere Elemente, die die richtige Handhaltung linkshändigen Schreibens unter Benutzung der Vorrichtung weiter verdeutlichen. Beispielsweise kann an der oberen linken Seite eine Hand eingezeichnet werden, die sowohl die richtige Position und Haltung der linken Hand wie auch die richtige Haltung des Schreibgeräts bei linkshändigem Schreiben verdeutlicht. In einer weiteren bevorzugten Ausführungsform kann dieses Element noch mit der Angabe der richtigen Schreibrichtung verbunden werden, beispielsweise in Form eines Pfeils, der - ausgehend von dem Handelement - die richtige Schreibrichtung anzeigt.

Bei der erfindungsgemäßen Vorrichtung handelt es sich bevorzugt um eine Schreibtischauflage mit den Maßen L (Länge) x B (Breite): L= 45 bis 65 cm x B= 30 bis 50 cm, bevorzugt hat die Schreibtischauflage eine Länge L = 55 cm und eine Breite B = 38 cm.

## Beschreibung

Kinder beziehungsweise Erwachsene mit einer angeborenen Linkshändigkeit entwickeln beim Erlernen des Schreibens mit der linken Hand oft eine unnatürliche und ergonomisch ungünstige Schreibhaltung, die sogenannte "Hakenhaltung", um ein Verwischen des geschriebenen Textes mit der Hand zu vermeiden. Dieses Problem kann so weit gehen, dass bei häufigem und längerem Schreiben mit der linken Hand gesundheitliche Probleme in Form von Sehnenscheidenentzündungen oder - in schweren Fällen - auch Knochendeformierungen (Entwicklung von Überbeinen) auftreten. Die gleichen Probleme betreffen nicht nur angeborene linkshändige Schreiber, sondern auch beispielsweise Schlaganfallpatienten oder Unfallopfer, die die rechte Hand nicht mehr zum Schreiben benutzen können.

Es bestand daher ein Bedarf für eine Vorrichtung, die angeborenen Linkshändern oder anderen Menschen, die das Schreiben mit der linken Hand erlernen müssen, ein linkshändiges Schreiben ermöglicht, ohne dass dadurch negative Auswirkungen auf die Gesundheit bis hin zu dauerhaften körperlichen Schäden hervorgerufen werden. Zudem bestand ein Bedarf für eine Vorrichtung, die das.Erlernen des richtigen Schreibens mit der linken Hand erleichtert.

Die Erfinderin der vorliegenden Anmeldung hat nun überraschend gefunden, dass ein besonders vorteilhaftes linkshändiges Schreiben dadurch erzielt werden kann, dass eine Vorrichtung zur Verfügung gestellt wird, die eine spezielle Anordnung des zu beschreibenden Blattes und der das Schreiben ausführenden Person herbeiführt, so dass sowohl eine unnatürliche und ungesunde Korper- und insbesondere Handhaltung der schreibenden Person vermieden wird, sowie andererseits ein Verwischen des Geschriebenen mit der Hand verhindert wird.

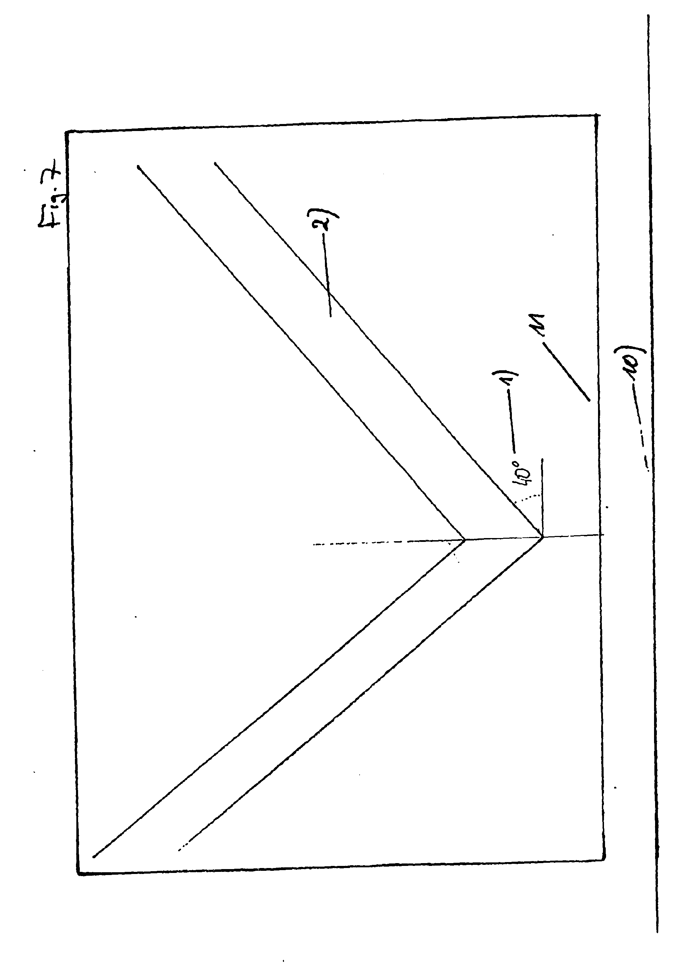

Die vorliegende Erfindung bezieht sich daher in einem ersten. Aspekt auf eine Vorrichtung umfassend eine Einrichtung zum Anlegen und/oder Fixieren des zu beschreibenden Blattes, dadurch gekennzeichnet, dass diese Einrichtung ein Drehen des Blattes gegen den Uhrzeigersinn um von 5 bis 85° bezogen auf die untere Außenkante der Vorrichtung hervorruft. In den Figuren, insbesondere Figur 7 ist verdeutlicht, wie der Winkel der Drehung gemessen werden muss.

In einer bevorzugten Ausfuhrungsform wird ein Drehen des Blattes um 15 bis 75°, ebenfalls bevorzugt 20 bis 60°, weiter bevorzugt 30 bis 50°, besonders bevorzugt 35 bis 45°, insbesondere bevorzugt 37 bis 43°, ebenfalls besonders bevorzugt 38 bis 42° und am meisten bevorzugt 40° hervorgerufen.

In einer weiteren bevorzugten Ausführungsform handelt es sich bei der Vorrichtung um eine Schreibtischauflage, die besonders bevorzugt aus Papier, Pappe, Kunststoff, Gummi, Holz oder Metall besteht oder eines oder mehrere der vorgenannten Materialien umfasst. Besonders bevorzugt ist eine Ausfertigung aus Kunststoff oder Gummi, die eine wasser- und wischfeste Oberflache aufweist, auf die das Blatt aufgelegt wird, sowie eine mit einer rutschhemmenden Beschichtung versehene Unterseite.

In einer weiteren bevorzugten Ausführungsform handelt es sich bei den "Einrichtungen", die die Lage des Blattes bestimmen, um auf der Vorrichtung eingezeichnete Linien. In einer ebenfalls bevorzugten Ausführungsform handelt es sich bei diesen "Einrichtungen" um Erhebungen, die entweder durch Aufbringen von Streifen oder Ausfräsen auf die Vorrichtung aufgebracht werden. In einer besonders bevorzugten Ausführungsform besteht die Vorrichtung aus Papier oder Kunststoff mit darauf aufgeklebten Kunststoffstreifen, die das zu beschreibende Blatt in der gewünschten Lage fixieren. Ebenso bevorzugt ist eine Ausfertigung der Vorrichtung aus Papier oder Pappe mit darauf aufgezeichneten "Einrichtungen", die ebenfalls die erwünschte Lage des Blattes genau vorgeben.

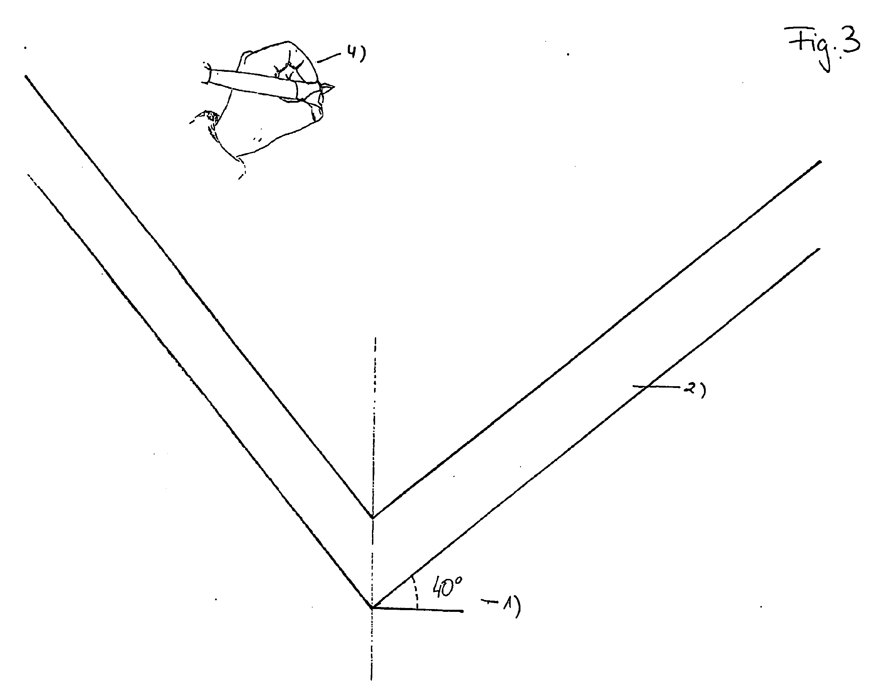

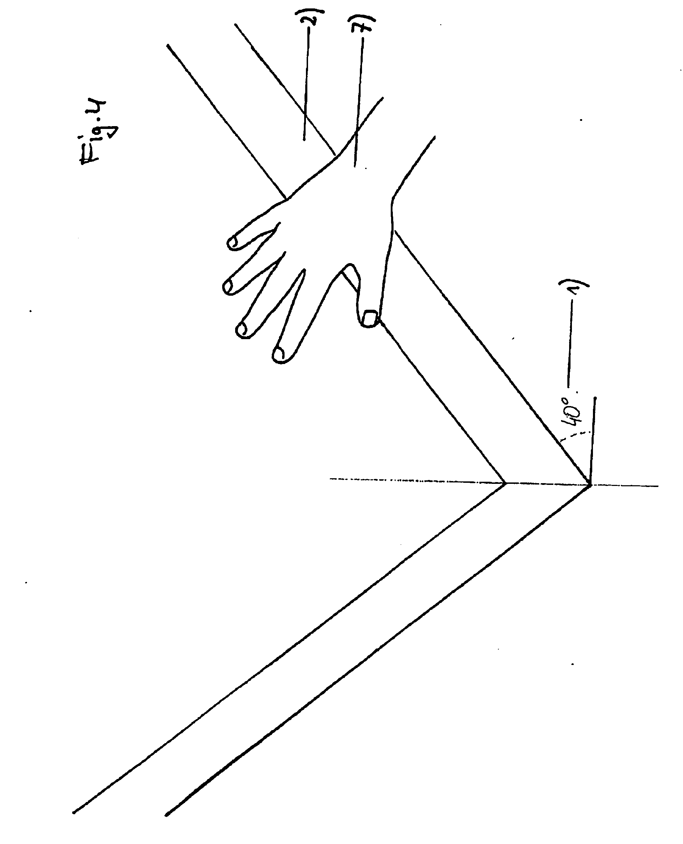

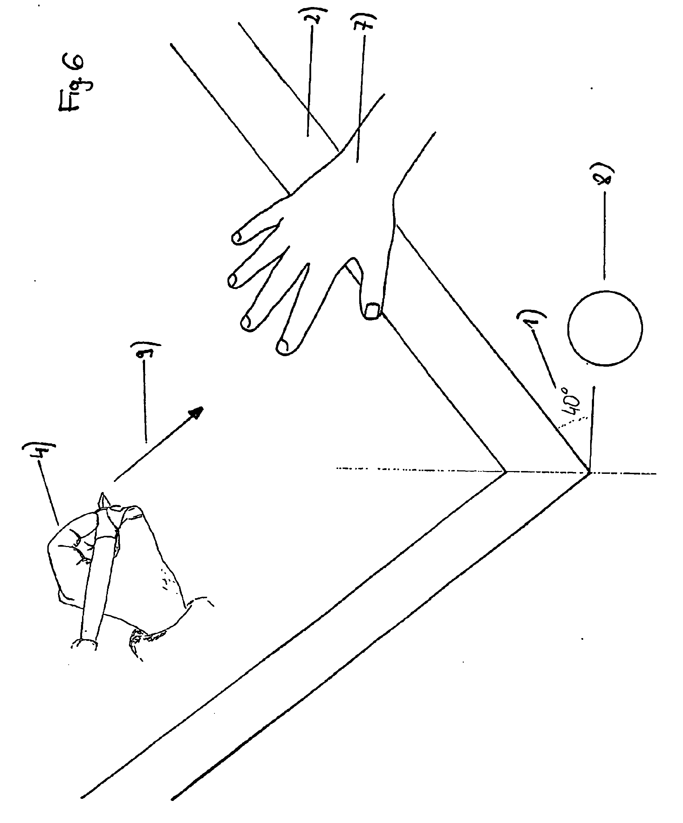

In einer weiteren bevorzugten Ausführungsform enthält die Vorrichtung weitere Elemente, die die richtige Handhaltung linkshändigen Schreibens unter Benutzung der Vorrichtung weiter verdeutlichen. Beispielsweise kann an der oberen linken Seite eine Hand eingezeichnet werden, die sowohl die richtige Position und Haltung der linken Hand wie auch die richtige Haltung des Schreibgeräts bei linkshändigem Schreiben verdeutlicht. Die richtige Haltung des Schreibgeräts in der linken Hand während des Schreibens wird bevorzugt durch die Abbildung eines Schreibgeräts verdeutlicht, das von der ebenfalls abgebildeten linken Hand gehalten wird (hier wird auf Figur 3, 5 und 6 verwiesen, die beispielshafte Ausführungsformen dieser bevorzugten Elemente zeigen). In einer weiteren bevorzugten Ausfuhrungsform kann dieses Element noch mit der Angabe der richtigen Schreibrichtung verbunden werden, beispielsweise in Form eines Pfeils, der - ausgehend von dem Handelement - die richtige Schreibrichtung anzeigt (hier wird auf Figur 6 verwiesen, die eine derartige Angabe in Form des Elements (9) enthält).

Ebenfalls bevorzugt ist eine Angabe, die dem Schreiber anzeigt, in welche Position er sich während des Schreibens in Bezug auf die Vorrichtung begeben muss, um das linkshändige Schreiben auf besonders bevorzugte Weise durchzuführen.

Bei der erfindungsgemäßen Vorrichtung handelt es sich bevorzugt um eine Schreibtischauflage mit den Maßen L (Länge) x B (Breite): L= 45 bis 65 cm x B= 30 bis 50 cm, bevorzugt hat die Schreibtischauflage eine Länge L = 55 cm und eine Breite B = 38 cm.

Die Vorrichtung der vorliegenden Anmeldung wird durch die nachfolgenden Figuren weiter verdeutlicht. Es wird hierbei betont, dass die Figuren lediglich veranschaulichende Wirkung besitzen und beispielhafte Ausfuhrungsformen der beanspruchten Vorrichtung darstellen, die vorliegende Anmeldung jedoch in keinster Weise beschränken.

### Es zeigen

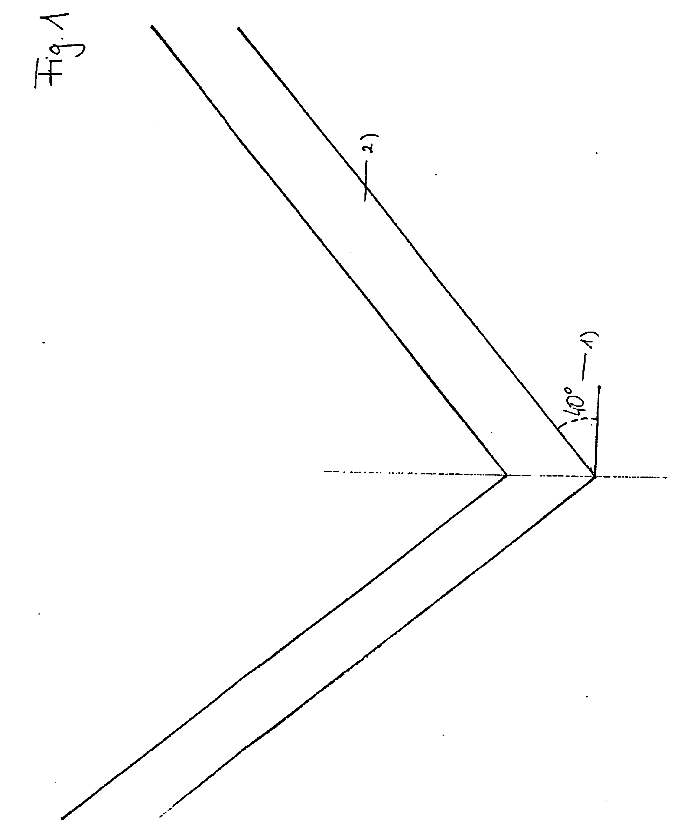

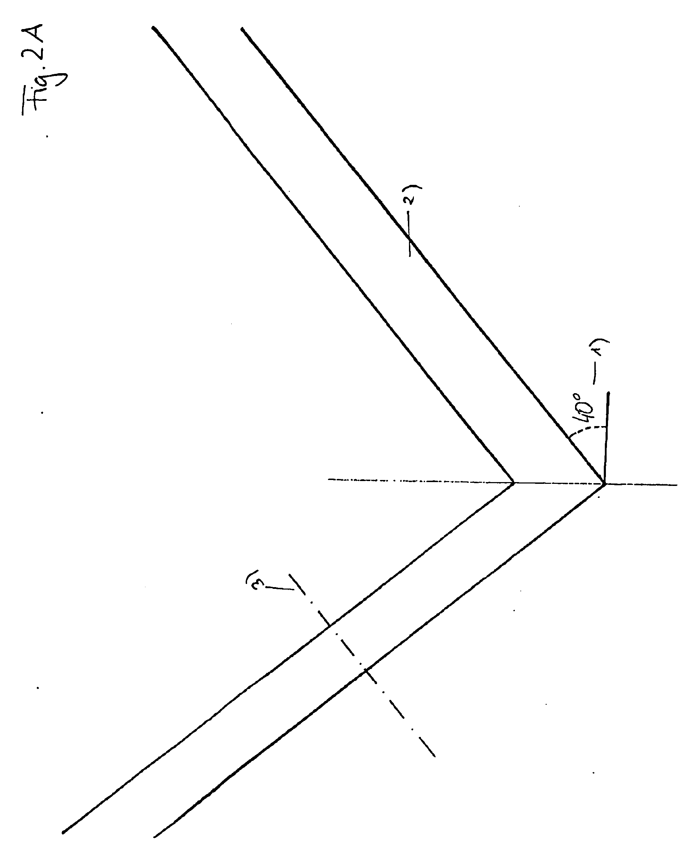

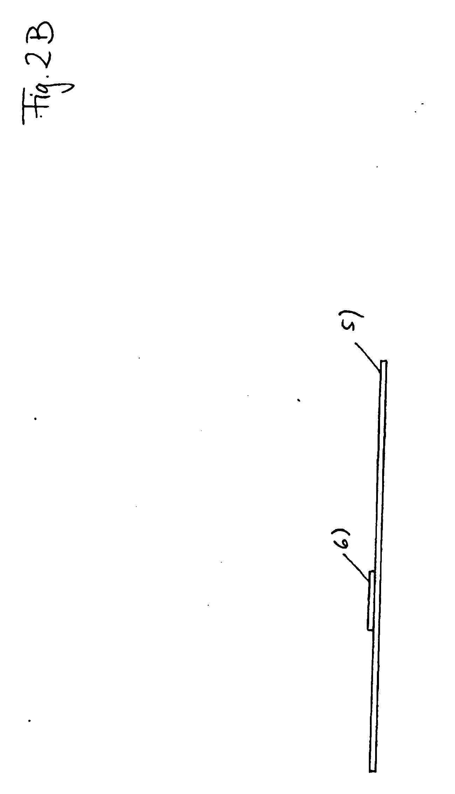

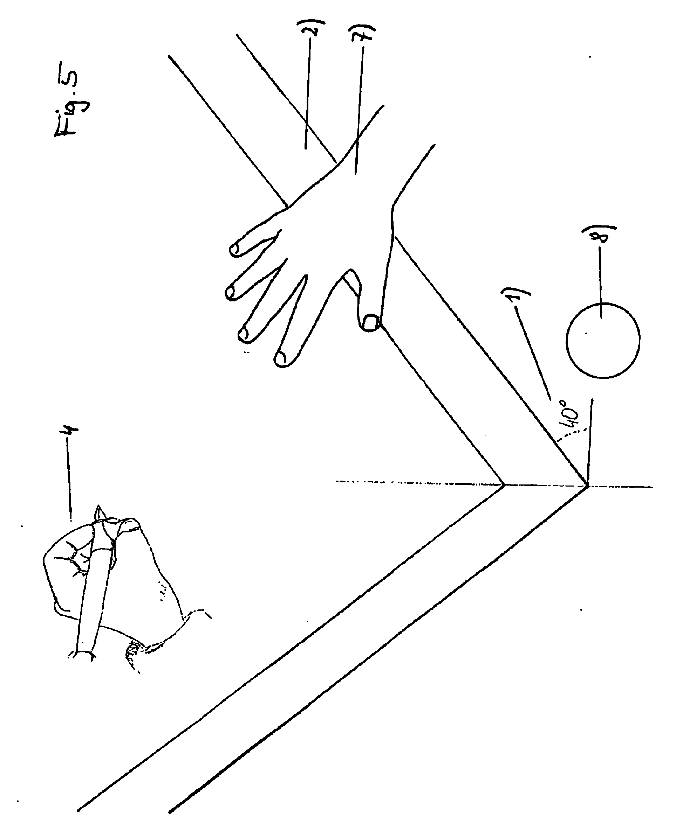

Figur 1:
   Eine erfindungsgemäße Vorrichtung in der Ausführung in Draufsicht mit eingezeichneten "Einrichtungen" (2) zur Verdeutlichung der Blattausrichtung bzw. der gewünschten Drehung (1).
Figur 2A:
   Eine erfindungsgemäße Vorrichtung in Draufsicht mit aufgeklebten "Einrichtungen" (2)zur Fixierung des zu beschreibenden Blattes bzw. der gewünschten Drehung (1) und einer Schnittachse (3) (siehe hierzu Figur 2B).
Figur 2B:
   Die Vorrichtung gemäß Figur 2A im Schnitt (Schnittachse in Figur 2A eingezeichnet). Gezeigt wird die Grundfläche der Vorrichtung im Schnitt (5) sowie die auf die Vorrichtung aufgebrachten "Einrichtungen" (6).
Figur 3:
   Eine erfindungsgemaße Vorrichtung gemäß Figur 1 oder 2A in Draufsicht, die zudem ein weiteres Element (4) zur Verdeutlichung der Handhaltung und Haltung des Schreibgeräts beinhaltet.
Figur 4:
   Eine erfindungsgemäße Vorrichtung gemäß Figur 1 oder 2A in Draufsicht, die desweiteren ein Element zur Verdeutlichung der Positionierung der rechten Hand (7) enthält.
Figur 5:
   Eine erfindungsgemaße Vorrichtung gemäß Figur 1 oder 2A in Draufsicht, die zudem die weiteren Elemente (4) und (7) sowie ein weiteres Element (8) enthält, das die Position markiert, die der linkshändige Schreiber bevorzugt während des Schreibens und unter Benutzung der erfindungsgemäßen Vorrichtung einnehmen sollte.
Figur 6:
   Eine erfindungsgemäße Vorrichtung gemäß Figur 5, die zudem ein Element (9) enthält, das die optimale Schreibrichtung der linken Hand anzeigt.
Fig. 7:
   Die Lage der erfindungsgemäßen Vorrichtung gemäß Fig. 1 auf einer Schreibtischplatte. Eingezeichnet ist die horizontale Schreibtischunterkante (10) zu der die Unterkante der Schreibtischauflage (11) parallel ausgerichtet wurde. Die Drehung (1) wird relativ zu Unterkante der Schreibtischauflage (11)(und damit relativ zu der Schreibtischunterkante (10)) gemessen.

## Patentansprüche

1. Vorrichtung umfassend eine Einrichtung zum Anlegen und/oder Fixieren des zu beschreibenden Blattes, **dadurch gekennzeichnet, dass** diese Einrichtung ein Drehen des Blattes gegen den Uhrzeigersinn um von 5 bis 85° bezogen auf die untere Außenkante der Vorrichtung hervorruft.

2. Vorrichtung gemäß Anspruch 1, wobei die Einrichtung ein Drehen des Blattes gegen den Uhrzeigersinn 15 bis 75°, ebenfalls bevorzugt 20 bis 60°, weiter bevorzugt 30 bis 50°, besonders bevorzugt 35 bis 45°, insbesondere bevorzugt 37 bis 43°, ebenfalls besonders bevorzugt 38 bis 42° hervorruft.

3. Vorrichtung gemäße einem der Ansprüche 1 oder 2, wobei es sich bei der Einrichtung zum Anlegen und/oder Fixieren des zu beschreibenden Blattes um Erhebungen handelt, die entweder durch Aufbringen von Streifen oder Ausfräsen auf die Vorrichtung aufgebracht werden.

4. Vorrichtung gemäß einem der vorhergehenden Ansprüche, weiter umfassend ein Element, das die richtige Handhaltung linkshändigen Schreibens unter Benutzung der Vorrichtung verdeutlicht.

5. Vorrichtung gemäß einem der vorhergehenden Ansprüche, weiter umfassend ein Element, das dem Schreiber anzeigt, in welche Position er sich während des Schreibens in Bezug auf die Vorrichtung begeben muss.

6. Vorrichtung gemäß einem der vorhergehenden Ansprüche, weiter umfassend ein Element, das dem Schreiber die bevorzugte Position der rechten Hand anzeigt.

7. Vorrichtung gemäß einem der vorhergehenden Ansprüche, wobei es sich bei der Vorrichtung um eine Schreibtischauflage handelt.

8. Vorrichtung gemäß einem der vorhergehenden Ansprüche, wobei die Vorrichtung aus Papier, Pappe, Kunststoff, Gummi, Holz oder Metall besteht oder eines oder mehrere der vorgenannten Materialien umfasst.

9. Vorrichtung gemäß Anspruch 7, wobei es sich bei der Vorrichtung um eine Schreibtischauflage aus Kunststoff und/oder Gummi handelt, wobei die Seite der Vorrichtung, die die Einrichtung zur Fixierung des Blattes umfasst ("Oberseite") aus wasser- und wischfestem Kunststoffmaterial gebildet ist und die Unterseite eine rutschhemmende oder rutschfeste Beschichtung umfasst.
